# EUROPEAN PATENT SPECIFICATION

(11) **EP 2 145 543 B1**
(45) Date of publication and mention of the grant of the patent: **09.11.2011**
(21) Application number: 08012819.2
(22) Date of filing: 16.07.2008
(51) Int. Cl.: A23B 4/005, A23B 4/16, A23L 3/015, A23L 3/10

(54) **Post-packaging pasteurization process**
Nachverpackungs-Pasteurisierungsverfahren
Procédé de pasteurisation post-conditionnement

(43) Date of publication of application: 20.01.2010
(73) Proprietor: Cryovac, Inc., Duncan SC 29334 (US)
(72) Inventor: Chouikhi, Sidi, Finedon Northants NN9 5HT (GB)
(74) Representative: Fraire, Cristina

(56) References cited:
- BE-A6- 1 005 520
- GATES KEITH W ET AL: "Storage changes of fresh and pasteurized blue crab meat in different types of packaging" JOURNAL OF FOOD SCIENCE, vol. 58, no. 2, 1993, pages 314-317, XP002518837 ISSN: 0022-1147
- MURPHY R Y ET AL: "Lethality of Listeria monocytogenes in fully cooked and vacuum packaged chicken leg quarters during steam pasteurization." JOURNAL OF FOOD SCIENCE, vol. 68, no. 9, 2003, pages 2780-2783, XP002518838 DEP. OF BIOL. & AGRIC. ENG., UNIV. OF ARKANSAS, FAYETTEVILLE, AR 72701, USA. E-MAIL RYMURPH(A)UARK.EDU

## Description

The present invention relates to a new post-packaging pasteurizing process specially designed for the vacuum skin packaging (VSP) technology. In particular the present invention relates to a new post-packaging pasteurization process for VSP packages particularly suitable for extended shelf-life chilled ready meals.

Vacuum skin packaging is a vacuum packaging process well known in the art where thermoplastic packaging materials are used to enclose a product under vacuum. The vacuum skin packaging process is in one sense a type of thermoforming process in which an article to be packaged serves as the mould for the forming upper or top web. More particularly, in vacuum skin packaging an article is placed on a lower or bottom support member and the supported article is then passed in a chamber where a formable top film is drawn upward against a heated dome and is then draped down over the article. The movement of the top web is controlled by vacuum and/or air pressure, and in a vacuum skin packaging arrangement, the interior of the container, i.e., the space between the lower or bottom support member and the upper or top web, is vacuumized before final welding of the top web to the support member. In a vacuum skin package the upper film thus forms a tight skin around the product and is sealed to the support all around the product. Skin packaging is described in many references, including French Patent No. 1,258,357, French Patent No. 1,286,018, Australian Patent No. 3,491,504, U.S. Pat. No. RE 30,009, U.S. Pat. No. 3,574,642, U.S. Pat. No. 3,681,092, U.S. Pat. No. 3,713,849, U.S. Pat. No. 4,055,672, and U.S. Pat. No. 5,346,735.

The term "ready meals" generally refers to those products, based on conventional ingredients such as meats, vegetables, and carbohydrates, either alone or more often in combination and typically with recipe skills added thereto by the manufacturer, that may be used as complete meals or meal components, with a high degree of readiness, completion and convenience. They can be divided in three sectors, i.e., the frozen sector, the ambient sector and the chilled sector, depending on the conditions in which they are then preserved. The one that is most gaining in popularity is the chilled one as the packaged products are not submitted to too severe treatments and thus maintain the taste and the nutritional properties of the starting food products. It is the sector that has almost no limitation in the use of the various ingredients and offers therefore a wider choice of different meals.

To increase the shelf-life of chilled ready meals post-packaging or in-package pasteurization is widely employed. This is a heat-treatment which is carried out on the package containing the product with the purpose to destroy bacteria, protozoa, molds, and yeasts. However, unlike sterilization, pasteurisation is not aimed at killing all pathogenic microorganisms in the product but at achieving a logarithmic reduction in their number, so that they are unlikely to cause disease during the shelf-life foreseen for the product, if the packaged product is correctly kept under refrigerated conditions.

For most of the food products but particularly for those packaged and preserved under vacuum, or under a modified atmosphere not containing oxygen, the most dangerous and resistant microorganism is *Clostridium botulinum.* The evaluation of whether the pasteurization treatment in these packages has been successful or not is therefore made by evaluating the reduction in the number of living spores of this anaerobic bacterium. Ultra-pasteurization is defined as the heat treatment capable of providing at least a 6 log reduction in the count of cold growing non-proteolytic *Clostridium botulinum* spores. This treatment will allow to extend the shelf-life of chilled ready meals beyond ten days.

The post-packaging ultra-pasteurisation, is typically carried out by loading the packaged products into a pasteurization pressure resistant vessel (generally called retort vessel), equipped with a heating and a cooling system. The temperature inside the package is first raised to a suitably selected value, and, after a suitably selected time spent at this temperature, necessary for the combination temperature/time to provide for the at least 6 log reduction in the number of *Clostridium botulinum* spores, the package is cooled down to room temperature and then chilled. In the ultra-pasteurization protocol currently used the heating temperature for ready meals is maintained below 99-100°C, to prevent boiling of the water contained in the food product as this would definitely lower the quality and the organoleptic properties of the food packaged. Depending on the particular food and its heat sensitivity, as well as on the particular recipe in which the food components have been combined, it might also be necessary or advisable to maintain the pasteurization temperature well below the above limit. On the other hand the spores of *Clostridium botulinum* have a remarkable resistance to heat and typically require temperatures around 80 °C to be destroyed. Furthermore, generally speaking, higher the temperature the shorter the time required to get the ultra-pasteurisation. Therefore the highest possible temperature, compatible with the particular food and with the desired organoleptic properties of the end product, is preferably applied in order to get a quicker and safer ultra-pasteurisation cycle. Typical values of the temperature in the conventional ultra-pasteurization processes, balancing all the above requirements, are therefore in the range from about 80 °C to about 95 °C, normally from about 85 °C to about 92 °C.

On the other hand typical times for the ultra-pasteurization process are comprised between at least 25 minutes, preferably at least 30 minutes, and 200 minutes or even more depending on the temperature applied, on the volume and volume/surface ratio of the packaged product, and on the effectiveness of the heat exchange between the selected heating system and the product. Generally however 180 minutes are sufficient to get the 6 log spores count reduction in the conventional ready meals packages available on the market.

During the heating step of the process, part of the water present in the food product converts into steam and the gas volume in the sealed package thus increases. To ensure that the package will not open up under the internal pressure by breakage of the heat-seal between the lidding film and the tray or bottom support, or that the lidding film will not become deformed by a possible stretch beyond the recovery limit, an overpressure is gradually applied during the heating step in the retort vessel, overpressure which is aimed at counterbalancing the increasing inner pressure. Typically values up to about 2-3 absolute bars are reached at the end of the heating step.

The ultra-pasteurization carried out according to the above conventional process has however shown to give a number of problems, mainly linked to the high temperature which is reached by the water contained in the product packaged. The main and more apparent one is the splitting of the sauces possibly present in the ready meal product into an oily and a watery component. This is due to the effect of the evaporation of water from the sauce and its subsequent condensation in the chilling step in drops separated from the oily sauce. A second undesirable effect due to the high temperature needed for the ultra-pasteurization is the loss of moisture from the protein components during the treatment. In the chilling step the moisture that was lost during the heating step will not re-hydrate the foodstuff but will appear on the product surface in the form of drops. GATES KEITH W ET AL: "Storage changes of fresh and pasteurized blue crab meat in different types of packaging" JOURNAL OF FOOD SCIENCE, vol. 58, no. 2, 1993, pages 314-317 describes the heat treatment at 96°C of chicken legs packed in a vacuum packaging machine.
MURPHY R Y ET AL: "Lethality of Listeria monocytogenes in fully cooked and vacuum packaged chicken leg quarters during steam pasteurization." JOURNAL OF FOOD SCIENCE, vol. 68, no. 9, 2003, pages 2780-2783 discloses a pasteurization process of blue crab meat in different types of packaging including vacuum seal packaging.
BE 1005520 relates to a pasteurization or sterilization process for packed food products.

It has now been found that it is possible to overcome the above problems by packaging the products as VSP and using a specific protocol for the ultra-pasteurization.

More particularly it has been found that it is possible to avoid the above problems and still obtain the ultra-pasteurization of a VSP packaged product, by setting the pressure of the retort vessel, at a relatively high level prior to the initiation of the heating cycle, keeping the pressure at such a relatively high level during the whole heating cycle and for most of the cooling cycle until the packaged product almost reaches room temperature.

By "relatively high pressure" what is meant here is a pressure higher than 2 absolute bar (hereinafter indicated as "bar"), preferably higher than 2.1 bar, more preferably higher than 2.3 bar, e.g., 2.5, 2.7, 2.9, 3.1, 3.3, 3.5, 3.7, and 3.9 bar. The pressure applied however should not be too high to possibly damage the packaged product. Furthermore the advantages brought in by pressure values higher than 5 bar will not compensate for the additional costs involved in generating, maintaining, and removing such a higher pressure. Thus the pressure set prior to the initiation of the heating cycle, and maintained during the whole heating and most of the cooling cycle until the packaged product almost reaches room temperature, will typically be comprised between 2 and 5 bar, and more preferably between 2 and 4 bar. The pressure can then be decreased during the last part of the cooling cycle so as to reach the atmospheric value when the product is at room temperature. It is important however to avoid decreasing the pressure when the temperature of the packaged product is still high enough to generate a large volume of steam inside the package. In a preferred embodiment therefore the pressure in the ultra-pasteurization vessel is maintained in the range between 2 and 5 bar, preferably between 2 and 4 bar, until the packaged product reaches room temperature (i.e., about 25 °C) and it is decreased to the atmospheric value during the further chilling of the package.

By carrying out the ultra-pasteurization of a VSP package according to the above method or protocol, it is possible to reach high temperatures, e.g., in the range 90-99°C but even higher, e.g. up to 108-110°C, without getting any sauce splitting and also controlling the loss of moisture from the protein components of the food product. In case of a VSP package in fact the high pressure in the ultra-pasteurization vessel will be transmitted by the skin top film to the inner part of the package. An increase in pressure will increase the boiling temperature of the water contained in the sauce and in the food product and will decrease the vapour pressure (i.e., the pressure exerted by the molecules that escape from the water contained in the sauce or in the protein components of the food product to form a separate vapour phase above the sauce/product surface) in the temperature range from room temperature, as the high pressure is applied in the retort vessel prior to the beginning of the heating cycle, to the temperature selected for the ultra-pasteurization. This will mean that a temperature sufficiently high to destroy the *Clostridium botulinum* spores can be attained without getting, during the whole ultra-pasteurization cycle, a noticeable sauce splitting effect or a substantial loss of moisture from the product.

Another advantage of carrying out the ultra-pasteurization of the VSP packages according to the present invention resides in the possibility of packaging the products also in easy-to-open type of VSP packages. Without using the protocol described in the present invention in case of an easy-to-open VSP package there might be the risk that in the first part of the ultra-pasteurization process the seal might leak due to the pressure exerted by the steam generated within the package that could break the seal or create a channel therein for its venting.

With respect to the conventional tray lidding packaging system, it has been shown that using VSP packages and applying the protocol according to the present invention the ultra-pasteurization process can be up to one third shorter. Times comprised between 25 and 120 minutes are generally sufficient to get the ultra-pasteurization of most of the ready meals on the market.

Object of the present invention is therefore a post-packaging ultra-pasteurization process for VSP packages, particularly suitable for extended shelf-life chilled ready meals, which process comprises setting the pressure of the retort vessel where the ultra-pasteurization of the VSP package is carried out, at a value comprised between 2 and 5 bar, prior to the initiation of the heating cycle, keeping the pressure within the above range during the whole heating cycle, carried out at a temperature and for a time sufficient to provide for a 6 log reduction in the count of cold growing non-proteolytic *Clostridium botulinum* spores, and for most of the cooling cycle until the packaged product almost reaches room temperature.

The ultra-pasteurization process of the present invention can be run in any of the retort apparatuses currently available on the market. For the heating step an infrared oven (e.g., an electric infrared oven or a gas infrared oven), a hot air convection or impingement oven, a steam oven, or an oven based on a combination of the above heating systems can be used. Steam ovens may operate within the temperature ranges generally used for the ready-meals post-package ultra-pasteurization, are cheaper and can be more easily employed, and are therefore the preferred ones. In particular ovens working with a wet-steam atmosphere and/or a more-or-less intensive hot water shower are widely known and used. Once the VSP packages are introduced in the retort vessel, generally in a multi-layer design to allow a certain number of VSP packages to be ultra-pasteurized in each cycle, the retort vessel, or autoclave, is closed and pressurized to a pressure value of at least 2 bar. The heating cycle is then initiated and the temperature is brought to the suitably selected value, typically comprised between 80 and 99 °C, the packages are maintained at this temperature for the time needed to get the ultra-pasteurization of the packaged products, while still under the pressure initially set, the heating is then stopped and the packages are cooled, typically by means of cold water sprinkles, still keeping the pressure at the originally set value. As soon as the packages reach room temperature the pressure is released while the chilling process continues either inside or, preferably, outside the retort vessel and a new ultra-pasteurization cycle is then initiated.

The pasteurized VSP package thus obtained may be completed, with or without a prior drying step, by the addition of a cardboard or plastic label on the tray bottom or side-walls or preferably by the addition of a cardboard or plastic sleeve configured around it and containing the desired indication from the manufacturer, such as ingredients, nutritional indications and directions of use.

The packaging materials used for the VSP packages submitted to the ultra-pasteurization cycle need to withstand the temperatures used in the process without any degradation or irreversible deformation and without releasing more than 60 ppm of global contaminants to the packaged food in contact therewith.

The VSP packages include a bottom packaging portion and a top one, wherein the term "bottom" packaging portion refers to the part of the packaging material on which the product to be packaged is disposed, while the term "top" packaging portion refers to the flexible packaging material that will be over the product and will be covering it in the packaging process.

The top packaging portion is typically a formable multi-layer film suitable for VSP applications, designed to be sealable to the specific food contact layer of the bottom portion, and having gas-barrier properties, i.e., being characterized by an OTR (evaluated at 23°C and 0 % R.H. according to ASTM D-3985) of less than 500 cm³/m².day.bar.

The bottom packaging portion can be a flat support, an in-line thermoformed tray obtained from a continuous web or it may be a pre-made tray.

Considering that often the chilled ready meals are at least warmed up in a microwave or in a conventional oven, preferably at least the packaging material used for the bottom packaging portion would also be microwaveable or dual ovenable. Polypropylene and polyester (such as PET) are the materials that are typically used for the ovenable applications, optionally coupled (coextruded, laminated, or coated) with a gas-barrier coating and/or with a mono- or, preferably, multi-layer liner to provide at least for the desired gas-barrier properties.

More preferably also the packaging material of the top portion will be suitably selected to be microwaveable. In such a case, as indicated above, the end pasteurized VSP package could also be a self-venting one as the protocol used in the ultra-pasteurization process according to the present invention will ensure that the hermeticity of the package is anyway maintained during the ultra-pasteurization. In particular it would be possible to use the microwaveable self-venting VSP packages described e.g. in WO 03/020608.

## Claims

1. A post-packaging ultra-pasteurization process for VSP packages, particularly suitable for extended shelf-life chilled ready meals, which process comprises setting the pressure of the retort vessel where the ultra-pasteurization of the VSP package is carried out, at a value comprised between 2 and 5 bar, prior to the initiation of the heating cycle, keeping the pressure within the above range during the whole heating cycle, carried out at a temperature and for a time sufficient to provide for a 6 log reduction in the count of cold growing non-proteolytic *Clostridium botulinum* spores, and for most of the cooling cycle until the packaged product almost reaches room temperature.

2. The post-packaging ultra-pasteurization process for VSP packages of claim 1 wherein the pressure in the retort vessel is set at a value comprised between 2 and 4 bar, preferably at a value higher than 2.1 bar, more preferably higher than 2.3 bar, e.g., 2.5, 2.7, 2.9, 3.1, 3.3, 3.5, 3.7, and 3.9 bar.

3. The post-packaging ultra-pasteurization process for VSP packages of any of the preceding claims, wherein the pressure in the retort vessel is gradually decreased during the last part of the cooling cycle so as to reach the atmospheric value when the product is at room temperature.

4. The post-packaging ultra-pasteurization process for VSP packages of claim 1 or 2 wherein the pressure in the retort vessel is maintained in the range between 2 and 5 bar, preferably between 2 and 4 bar, until the packaged product reaches room temperature (i.e., about 25 °C) and it is lowered to the atmospheric value during the further chilling of the package.

5. The post-packaging ultra-pasteurization process for VSP packages of any of the preceding claims, wherein the VSP packages are brought to a temperature comprised between about 80°C and about 110 °C, and maintained at a temperature in this range for a period of time sufficient to provide a 6 log reduction in the count of cold growing non-proteolytic *Clostridium botulinum* spores.

6. The post-packaging ultra-pasteurization process for VSP packages of claim 5 wherein the VSP packages are brought to a temperature comprised between about 90 °C and about 99 °C, and maintained at a temperature in this range for a period of time sufficient to provide a 6 log reduction in the count of cold growing non-proteolytic *Clostridium botulinum* spores.

7. The post-packaging ultra-pasteurization process for VSP packages of claim 5 wherein the VSP packages are maintained at the suitably selected temperature for a period of time of from about 25 to about 200 minutes.

8. The post-packaging ultra-pasteurization process for VSP packages of any of the preceding claims which is carried out on VSP packages where the bottom packaging portion is microwaveable or dual ovenable, and, preferably the top packaging portion is microwaveable.

9. The post-packaging ultra-pasteurization process for VSP packages of any of the preceding claims which is carried out on an easy-to-open VSP package.

10. The post-packaging ultra-pasteurization process for VSP packages of any of the preceding claims which is carried out on a microwaveable self-venting VSP package.

## Patentansprüche

1. Verfahren zur Ultrapasteurisierung nach dem Verpacken für VSP (Vacuum Skin Packaging, Skin-Vakuumverpackung)Verpackungen, insbesondere geeignet für gekühlte Fertiggerichte mit längerer Haltbarkeit, wobei das Verfahren das Einstellen des Drucks des Retortengefäßes, in dem die Ultrapasteurisierung der VSP-Verpackung durchgeführt wird, auf einen Wert zwischen 2 und 5 bar vor dem Einleiten des Heizzyklus umfasst, wobei der Druck innerhalb des obigen Bereichs während des gesamten Heizzyklus, der bei einer Temperatur und für eine Zeit durchgeführt wird, die dazu ausreichen, eine Verringerung des Zählwerts von in Kälte wachsenden, nicht-proteolytischen *Clostridium-botulinum-*Sporen um 6 Log-Stufen bereitzustellen, und für den Großteil des Kühlzyklus, bis das verpackte Produkt Raumtemperatur nahezu erreicht, gehalten wird.

2. Verfahren zur Ultrapasteurisierung nach dem Verpacken für VSP-Verpackungen nach Anspruch 1, wobei der Druck in dem Retortengefäß auf einen Wert zwischen 2 und 4 bar, vorzugsweise auf einen Wert von höher als 2,1 bar, mehr bevorzugt höher als 2,3 bar, z. B. 2,5, 2,7, 2,9, 3,1, 3,3, 3,5, 3,7 und 3,9 bar, eingestellt wird.

3. Verfahren zur Ultrapasteurisierung nach dem Verpacken für VSP-Verpackungen nach einem der vorhergehenden Ansprüche, wobei der Druck in dem Retortengefäß während des letzten Teils des Kühlzyklus allmählich gesenkt wird, um den Atmosphärenwert zu erreichen, wenn das Produkt Raumtemperatur aufweist.

4. Verfahren zur Ultrapasteurisierung nach dem Verpacken für VSP-Verpackungen nach Anspruch 1 oder 2, wobei der Druck in dem Retortengefäß im Bereich zwischen 2 und 5 bar, vorzugsweise zwischen 2 und 4 bar gehalten wird, bis das verpackte Produkt Raumtemperatur (d. h. etwa 25 °C) erreicht, und er während der weiteren Kühlung der Verpackung auf den Atmosphärenwert gesenkt wird.

5. Verfahren zur Ultrapasteurisierung nach dem Verpacken für VSP-Verpackungen nach einem der vorhergehenden Ansprüche, wobei die VSP-Verpackungen auf eine Temperatur zwischen etwa 80 °C und etwa 110 °C gebracht werden und bei einer Temperatur in diesem Bereich für eine Zeitdauer gehalten werden, die dazu ausreicht, eine Verringerung des Zählwerts von in Kälte wachsenden, nicht-proteolytischen *Clostridium-botulinum*-Sporen um 6 Log-Stufen bereitzustellen.

6. Verfahren zur Ultrapasteurisierung nach dem Verpacken für VSP-Verpackungen nach Anspruch 5, wobei die VSP-Verpackungen auf eine Temperatur zwischen etwa 90 °C und etwa 99 °C gebracht werden und bei einer Temperatur in diesem Bereich für eine Zeitdauer gehalten werden, die dazu ausreicht, eine Verringerung des Zählwerts von in Kälte wachsenden, nicht-proteolytischen *Clostridium-botulinum-*Sporen um 6 Log-Stufen bereitzustellen.

7. Verfahren zur Ultrapasteurisierung nach dem Verpacken für VSP-Verpackungen nach Anspruch 5, wobei die VSP-Verpackungen bei der geeignet ausgewählten Temperatur für eine Zeitdauer von etwa 25 bis 200 Minuten gehalten werden.

8. Verfahren zur Ultrapasteurisierung nach dem Verpacken für VSP-Verpackungen nach einem der vorhergehenden Ansprüche, das an VSP-Verpackungen durchgeführt wird, bei denen das untere Verpackungsteil mikrowellengeeignet oder doppelofentauglich ist und vorzugsweise das obere Verpackungsteil mikrowellengeeignet ist.

9. Verfahren zur Ultrapasteurisierung nach dem Verpacken für VSP-Verpackungen nach einem der vorhergehenden Ansprüche, das an einer leicht zu öffnenden VSP-Verpackung durchgeführt wird.

10. Verfahren zur Ultrapasteurisierung nach dem Verpacken für VSP-Verpackungen nach einem der vorhergehenden Ansprüche, das an einer mikrowellengeeigneten, selbstentlüftenden VSP-Verpackung durchgeführt wird.

## Revendications

1. Procédé d'ultra-pasteurisation après conditionnement pour conditionnements moulants sous vide (VSP, Vacuum Skin Package), particulièrement approprié pour des plats cuisinés refroidis à durée de conservation prolongée, lequel procédé comprend un réglage de la pression de l'autoclave où est effectuée l'ultra-pasteurisation du conditionnement moulant sous vide, à une valeur comprise entre 2 et 5 bar, avant l'amorçage du cycle de chauffage, en gardant la pression dans l'intervalle qui précède durant l'intégralité du cycle de chauffage, effectué à une température et pendant un temps suffisants pour assurer une réduction de 6 logs du nombre de spores non protéolytiques à croissance à froid *Clostridium botulinum,* et pendant la majorité du cycle de refroidissement jusqu'à ce que le produit conditionné atteigne pratiquement la température ambiante.

2. Procédé d'ultra-pasteurisation après conditionnement pour conditionnements moulants sous vide selon la revendication 1, dans lequel la pression dans l'autoclave est définie à une valeur comprise entre 2 et 4 bar, de préférence à une valeur supérieure à 2,1 bar, plus préférablement supérieure à 2, 3 bar, par exemple, 2,5, 2,7, 2,9, 3,1, 3,3, 3,5, 3,7, et 3,9 bar.

3. Procédé d'ultra-pasteurisation après conditionnement pour conditionnements moulants sous vide selon l'une quelconque des revendications précédentes, dans lequel la pression dans l'autoclave est progressivement diminuée durant la dernière partie du cycle de refroidissement de façon à atteindre la valeur atmosphérique lorsque le produit est à la température ambiante.

4. Procédé d'ultra-pasteurisation après conditionnement pour conditionnements moulants sous vide selon la revendication 1 ou 2, dans lequel la pression dans l'autoclave est maintenue dans l'intervalle entre 2 et 5 bar, de préférence entre 2 et 4 bar, jusqu'à ce que le produit conditionné atteigne la température ambiante (c'est-à-dire, environ 25 °C) et elle est abaissée à la valeur atmosphérique durant le refroidissement ultérieur du conditionnement.

5. Procédé d'ultra-pasteurisation après conditionnement pour conditionnements moulants sous vide selon l'une quelconque des revendications précédentes, dans lequel les conditionnements moulants sous vide sont amenés à une température comprise entre environ 80 °C et environ 110 °C, et maintenus à une température dans cet intervalle pendant une période de temps suffisante pour fournir une réduction de 6 logs du nombre de spores non protéolytiques à croissance à froid *Clostridium botulinum.*

6. Procédé d'ultra-pasteurisation après conditionnement pour conditionnements moulants sous vide selon la revendication 5 dans lequel les conditionnements moulants sous vide sont amenés à une température comprise entre environ 90 °C et environ 99 °C, et maintenus à une température dans cet intervalle pendant une période de temps suffisante pour fournir une réduction de 6 logs du nombre de spores non protéolytiques à croissance à froid *Clostridium botulinum.*

7. Procédé d'ultra-pasteurisation après conditionnement pour conditionnements moulants sous vide selon la revendication 5, dans lequel les conditionnements moulants sous vide sont maintenus à la température choisie de manière appropriée pendant une période de temps allant d'environ 25 à environ 200 minutes.

8. Procédé d'ultra-pasteurisation après conditionnement pour conditionnements moulants sous vide selon l'une quelconque des revendications précédentes, qui est effectué sur des conditionnements moulants sous vide où la partie inférieure du conditionnement est résistante aux micro-ondes ou résistant à un four à double fonction, et, de préférence la partie supérieure du conditionnement est résistante aux micro-ondes.

9. Procédé d'ultra-pasteurisation après conditionnement pour conditionnements moulants sous vide selon l'une quelconque des revendications précédentes qui est effectué sur un conditionnement moulant sous vide facile à ouvrir.

10. Procédé d'ultra-pasteurisation après conditionnement pour conditionnements moulants sous vide selon l'une quelconque des revendications précédentes, qui est effectué sur un conditionnement moulant sous vide résistant aux micro-ondes à auto-évacuation.
